Europäisches Patentamt

European Patent Office

Office européen des brevets

(11) Publication number: **0 352 132**
A2

# EUROPEAN PATENT APPLICATION

(21) Application number: **89307445.0**

(22) Date of filing: **21.07.89**

(51) Int. Cl.5: **B 62 K 27/14**

(30) Priority: **21.07.88 ZA 885272**

(43) Date of publication of application:
**24.01.90 Bulletin 90/04**

(84) Designated Contracting States:
**AT BE CH DE ES FR GB GR IT LI LU NL SE**

(71) Applicant: **Myburgh, Johannes Hermanus**
**11th Floor Glencairn 73, Market Street**
**Johannesburg Transvaal (ZA)**

(72) Inventor: **Myburgh, Johannes Hermanus**
**11th Floor Glencairn 73, Market Street**
**Johannesburg Transvaal (ZA)**

(74) Representative: **Valentine, Francis Anthony Brinsley et al**
**REDDIE & GROSE 16 Theobalds Road**
**London WC1X 8PL (GB)**

(54) **Motor cycle side car coupling.**

(57) A coupling (1) for connecting a motor cycle (2) to a side car (3) is provided which includes a first elongated member (10) which is pivotally connectable to the cycle (2) and the car (3) so that the cycle (2) and car (3) when so connected are each capable of pivotal movement about an axis which is parallel to the normal direction of forward travel of the vehicles; and means (19, 20, 28, 31) which is actuated by the pivotal movement of the cycle (2) to cause the car (3) to tilt through an angle of which the size depends on the tilting angle of the cycle (2) and on whether such tilting of the cycle (2) is towards or away from the car (3).

The means comprises two elongated flexible elements (28, 31) which are located vertically above and below the first elongated member (10) and of which the ends (29, 30, 32, 33) are respectively connected to opposite ends of two semi circular brackets (19, 20) which are secured to the cycle (2) and the car (3) respectively, the brackets (19, 20) being pivotally connected to the elongated member (10) in positions which are located below their radially extending radii of symmetry so that the brackets (19, 20) serve as cams which translate a pivotal movement of the bracket (19) on the cycle (2) about the said point into a larger pivotal movement of the other bracket (20) on the car (3) when the cycle (2) tilts in one direction, and vice versa when it tilts in the opposite direction.

FIGURE 2

EP 0 352 132 A2

**Description**

## MOTOR CYCLE SIDE CAR COUPLING

THIS invention relates to a coupling for connecting a motor cycle to a side car.

It is well known that in the conventional motor cycle side car combination the side car is usually substantially rigidly connected to the motor cycle, and that the motor cycle of such a combination accordingly loses subtantially all of its ability to tilt sideways during cornering, so sacrificing its single most important driving characteristic.

The reason for such tilting of a motor cycle during cornering is related to the fact that any movable vehicle negotiating a corner has a centrifugal force acting on it of which the resultant is in a direction upwardly and away from the corner. The magnitude of such a force is expressed by the formula $F = \frac{mv^2}{r}$ wherein m = the mass of the vehicle, v = its velocity, and r = the radius of the turning circle.

In the case of a motor cycle, such centrifugal force is countered by tilting the cycle so that it "leans" into the corner.

It will be appreciated that, in the case of a motor cycle side car combination, such a force acts on both the vehicles, although to a different degree because of the substantial differences in mass between the two vehicles. For the sake of this discussion the fact that such a mass will depend on the particular load which such a vehicle carries, will be ignored.

A further factor which affects the aforesaid centrifugal forces is that the radii of the turning circles of the two vehicles in such a combination are different and, generally speaking, the smaller the radius, the larger the force. As a result of this, the vehicle located on the inside of such a turning circle has to tilt more than the vehicle located on the outside of the circle.

In order to simplify this explanation, particularly in order to avoid further potential complications which can be related to such aspects as whether the side car is located on the left or right hand side of the cycle, and whether the applicable traffic rules dictate driving on the left or right hand side of the road, the arrangement which will be described in the rest of this specification will be one in which the side car is located on the right hand side of the cycle when viewed by a person from the cycle facing in the normal forward direction of travel of the cycle, so that it suits the situation where the applicable traffic rules dictate driving on the right hand side of the road.

In the light of the aforesaid explanation, the reason why a motor cycle of which the side car is rigidly connected to the cycle loses substantially all of its manoeuvrability during cornering, can readily be appreciated.

Although it has been suggested (see for example U.S. Patent no 4,022,483 (Wallick)) to connect such a side car and cycle pivotally to each other by means of a so called "parallelogram"-type of coupling, and therefor to allow the car to tilt with the cycle during cornering, such arrangements suffer from the disadvantage that because of the variation in the effective length of the work arm of the coupling during tilting of the cycle, the cycle cannot adequately and accurately transfer to the side car the pulling or pushing force which is required to tilt the car towards and away from the cycle respectively. A further disadvantage is that they make no provision for the fact that for the same sized turning circle, and hence the same degree of tilt of the cycle, the radius of the turning circle of the car depends on whether the car is located on the "outside" or"inside" of the corner which is being negotiated. The manoeuvrability of such a combination, although being better than that where the car is rigidly connected to the cycle, is accordingly still substantially less than that of the cycle on its own.

It is accordingly an object of this invention to provide a coupling for connecting a side car to a motor cycle with which the aforesaid problem may be overcome or at least minimised.

It is a further object of this invention to provide a motor cycle side car combination connected to each other by means of such a coupling.

According to the invention a coupling for connecting a motor cycle to a side car includes a first elongated member which is pivotally connectable to the cycle and the car so that the cycle and car when so connected are each capable of pivotal movement about an axis which is parallel to the normal direction of forward travel of the vehicles; and means which is actuated by the pivotal movement of the cycle to cause the car to tilt through an angle of which the size depends on the tilting angle of the cycle and on whether such tilting of the cycle is towards or away from the car.

It will be appreciated that, apart from the fact that such an arrangement allows a car to tilt with its cycle and hence serves to improve the manoeuvrability of the combination substantially, the fact that the angle of tilt of the car can be different depending on whether the tilting of the cycle relative to the car is towards or away from the car, allows the combination to overcome the problem referred to above as relating to whether the car is located on the "inside" or "outside" of the corner which is being negotiated.

Further according to the invention, the said means includes a second elongated member of which the ends are connected to the cycle and the car respectively in positions spaced vertically from the said first member; the effective length of the second member being able to increase or to decrease in order to tilt the car away or towards the cycle.

It will be appreciated that if the second member is located vertically above the first member and a corner is negotiated with the cycle located on the inside of the corner, the effective length of the second member can be increased to allow the car to tilt through a lesser angle than that of the cycle, and vice versa when a turn in the opposite direction is being negotiated.

Still further according to the invention the said means also includes a third elongated member of which the ends are connected to the cycle and the car respectively in positions spaced vertically from the said first member, but on the opposite side of the said first member as that on which the said second member is located, the effective length of the said third member also being able to be increased or decreased in order to change the angle of tilt of the car relative to the cycle.

It will be appreciated that with such an arrangement, the combined tilting effects of the second and third members serve to re-inforce each other.

Still further according to the invention the means includes two semi-circular disc-like brackets which are secured to the frames of the cycle and the car respectively in diametrically opposed positions, with the straight ends of the brackets extending in a plane which is substantially perpendicular to the surface on which the vehicles are supported in their normal upright positions, and with the plane furthermore being substantially perpendicular to the longitudinal axes of the vehicles so that the curved ends of the brackets face each other; the aforesaid first elongated member comprising an elongated rigid bar of which the ends are respectively pivotally connected to each of the brackets in positions which are each linearly off set relative to the radially extending axis of symmetry of the bracket; the aforesaid second member comprising an elongated flexible element of which the one end is connected to one of the ends of the straight part of one of the circular brackets, and its other end to the corresponding end of the other bracket; and the aforesaid third member comprising an elongated flexible element of which the ends are connected to the other of the aforesaid ends of the straight ends of the brackets, with the arrangement such that such element towards each of its ends extends over at least part of the curved surfaces of the circular brackets to which it is connected.

It will be appreciated that with such an arrangement the two circular brackets serve as cams by means of which pivotal movement of the one bracket will be translated via the flexible elements into a larger pivotal movement of the other bracket when the cycle tilts in one direction, and vice versa when it tilts in the opposite direction. Furthermore, because the force for tilting the side car is not translated from the cycle to the car by means of an elongated rigid member as is the case with the aforesaid known parallelogram-type of coupling, there is substantially no variation in the effective length of the work arm during the tilting operation.

Further according to the invention the off-setting of the apertures in the brackets is such that they are located vertically below the aforesaid radially extending axis of symmetry.

Still further according to the invention the aforesaid bar is provided with a plurality of rollers which serve to trap the flexible elements in a manner so that they can engage the curved surfaces of the circular brackets over substantial parts thereof.

Preferably the rollers are so located that that part of the element which extends between the point where it is secured to the bracket, and the roller nearest to such point is carried in engagement with a substantial part of the curved end of the particular bracket.

With this arrangement, when the cycle is tilted in one direction, say when the cycle leans into a corner during its course of travel, the bracket on the cycle will rotatably move with the cycle about its pivot point relative to the first elongated member, and the flexible elements will exert a pulling force on the car forcing it to pivot an appropriate amount in the same direction about its pivot point relative to the said first elongated member, it being appreciated that the cam effect of the brackets will be such that the vehicle with the smaller turning circle will tilt more than the vehicle with the larger turning circle.

Preferably the aforesaid bar is constituted by two substantially parallel spaced plates which include between each of their opposite ends a pin which passes through an aperture in the bracket which aperture is located in the aforesaid off set position on the bracket so that the bracket is rotatably carried in a cam-like movement relative to the pin, the aforesaid rollers also being rotatably received in pairs between the plates in positions located towards the outer ends of the plates.

The flexible elements may comprise metal or "flat fibre" straps, chains, sprocket belts, gear chains, V-belts or the like.

Preferably the coupling also includes a releasable locking device by means of which the pivotal connection between the cycle and the car can be prevented so that the coupling between the two vehicles is rendered substantially rigid, i.e. similar to that of the conventional arrangement.

Such a device may, for example, comprise a releasable lever operated clamp which serves to prevent the flexible elements, or the brackets from moving relative to the aforesaid first elongated member.

In order to allow the combination also to cope with different car loads, as well as different road surfaces, the suspension of the side car can be provided with one or more pneumatically operated shock absorbers of which the air pressure is adjustable.

Further according to the invention the said first elongated member has a cross member connected to it which extends transversely the elongated member in the direction of normal forward travel of the vehicles, the other end of the cross member being connected to a fourth substantially rigid elongated member which extends substantially parallel to the said first elongated member, the ends of the fourth member also being pivotally connectable to the cycle and the car respectively.

This fourth elongated member and cross member serve to reinforce the connection between the cycle and the car, and particularly to restrain the cycle and car from carrying out a "rocking like" movement during travel.

The side-car can be of any suitable construction, but preferably it is carried on a land engageable wheel which is mounted towards the centre of the car in a position located substantially immediately below the seat of the car, and more or less in line with the rear wheel of the cycle.

Preferably, also, the side car comprises a substantially box-like enclosure in which a person can sit, and it is provided with an opening at its upper end which can be closed off by means of a wind shield which is slidably mounted on the body of the car.

The invention will now be described further by way of example with reference to the enclosed drawings, wherein:

Figure 1 is a diagrammatic plan view of a motor cycle and side car connected to each other by means of a coupling according to the invention;

Figure 2 is a diagrammatic perspective view of the coupling of figure 1 as seen at an angle in the general direction of arrow A in figure 1;

Figure 3 is a cross section on lines V:V of figure 2; and

Figure 4 is a diagrammatic perspective view of a side-car acccording to the invention.

In this embodiment of the invention coupling 1 is employed for connecting a motor cycle 2 to a side car 3, the normal forward direction of travel of the vehicles being in the direction indicated by arrow A.

As will be noted, side car 3 is located on the right hand side of motor cycle 2 when viewing it from motor cycle 3 looking in the direction of arrow A, and the arrangement is accordingly intended for travelling in accordance with traffic rules dictating travelling on the right hand side of the road. It will of course be appreciated that in another arrangement side car 3 can be located on the left hand side of motor cycle 2.

Side car 3 is carried on a land engageable wheel 4 which is mounted on the centre line of car 3 substantially in line with the rear wheel 5 of cycle 2. The width of the tyre of wheel 4 is substantially twice that of the tyre of wheel 5. In this embodiment of the invention the tyre width of wheel 4 is approximately 200mm and that of wheel 5 approximately 100mm, although it will be appreciated that these dimensions are not critical.

Cycle 2 includes in conventional manner a seat 6, fuel tank 7, front wheel 8 and handle bars 9.

Coupling 1 includes a first elongated member 10 which is connected by means of a cross member 11 to a second elongated member 12 which extends substantially parallel to member 10 in substantially the same plane.

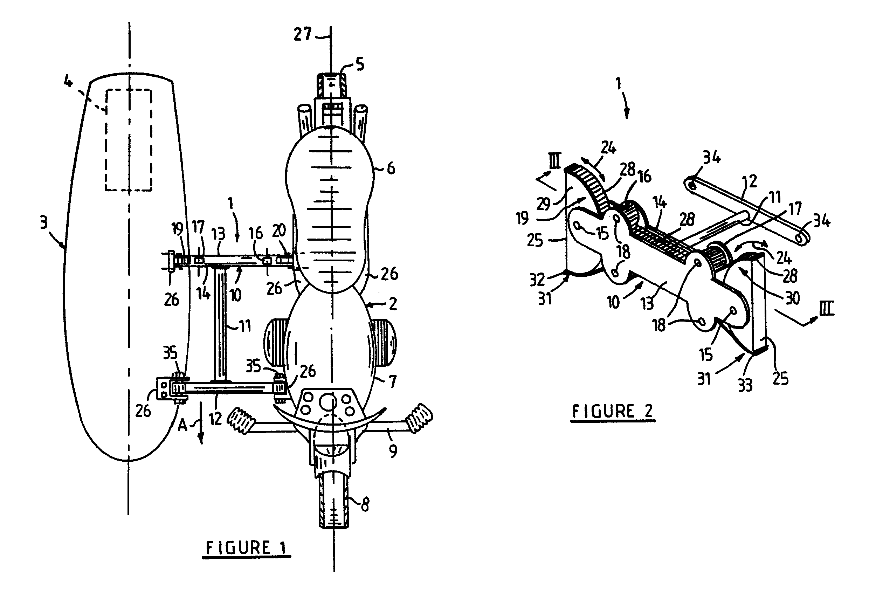

As can be seen from figure 2, member 10 comprises two elongated parallel spaced flat metal bars 13 and 14, of which each of the free ends is provided on its longitudinal axis of symmetry with a pin 15 which extends between the bars.

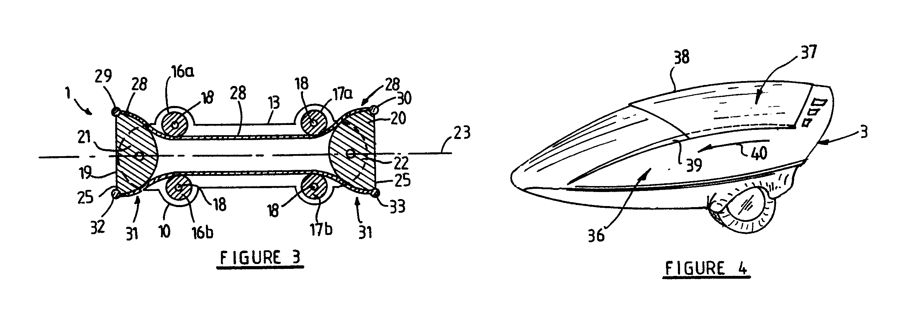

As can be seen from figure 3, each of the bars 13 and 14 is provided towards its ends with two pairs of vertically spaced rollers 16a and 16b and 17a and 17b which are rotatably carried on vertically spaced pins 18 which also extend between bars 13 and 14.

Each of the ends of member 10 are connected to a semi-circular disc-like metal bracket 19 and 20 respectively, each bracket including an aperture 21 and 22, respectively, which is located slightly below the radially extending axis of symmetry of the bracket, and in which a pin 15 is rotatably received so that members 19 and 20 are pivotally movable relative to member 10 in the clock and anti-clock directions as indicated by arrows 24 (figure 2).

The straight ends 25 of members 19 and 20 are each secured to the frames 26 of cycle 2 and car 3 respectively in such a manner that member 10 extends substantially perpendicularly to the longitudinal axes 27 of the vehicles with the bars 13 and 24 extending subtantially perpendicular to the surface on which the vehicles are located in their normal upright positions and so that the curved ends of the brackets face each other.

A second elongated member comprising a flexible metal, or "flat fibre", strap, sprocket belt, gear chain, V-belt or chain 28 has its opposite ends secured to brackets 19 and 20 at their one set of ends 29 and 30 respectively, with the rest of the strap, belt or chain extending around the upper part of the curved end of the member 19, around the lower ends of rollers 16a and 17a, and around the upper part of the curved end of member 20 (see figure 3).

A second elongated member comprising a similar strap, belt or chain 31 has its opposite ends secured to members 19 and 20 at their ends 32 and 33 respectively, with the rest of the strap, belt or chain extending around the lower part of the curved end of member 19 around the upper ends of rollers 16b and 17b, and over the lower part of the curved end of member 20.

Each of the ends of member 12 is provided with an aperture 34 (figure 2) which is adapted rotatably to engage a pin 35 provided on frames 26 of cycle 2 and car 3 respectively.

As shown in figure 4, side car 3 has a box-like cabin 36 for receiving a passenger or the like (not shown) who can enter through an aperture 37 provided at the upper end thereof.

A transparent wind shield 38, which is slidably received in a pair of parallel extending slots 39 provided along opposite sides of the body of car 3, can slide forward in the direction of arrow 40 to the front part of the car body to expose aperture 37 in order to allow the passenger to climb in or out. Shield 38 can also be moved backwardly until it completely covers aperture 37.

In use, side car 3 is connected by means of coupling 1 to motor cycle 2 in the manner described above.

It will be appreciated that because of the particular linkage between brackets 19 and 20, any pivotal movement of bracket 20 about its pivot point 15, in say, the anti-clockwise direction of arrow 24 in figure 2, will cause bracket 19 to pivot in the same direction. However, because of the cam effect which is caused by the fact that the pivot points 15 of bracket 19 and 20 are located below the radially extending axis of symmetry of bracket 19 and 20, the angle of tilt of bracket 20, and hence of cycle 2, will be larger than that of bracket 19 and hence car 3.

In order to prevent any tilting of car 3 relative to cycle 2, the movement of straps, chains or belts 28 and 31, and/or of that of one or both of brackets 19 and 20, relative to member 10 has to be arrested, and this can be done by means of a releasable lever operated clamp (not shown) which can, for example, trap straps, chains or belts 28 and 31 against member 10 to prevent any such movement, or, alternatively can lock member 10 and one or both brackets 19 and 20 against movement relative to each member 10.

Such rigid rendering of the coupling may, for example, be required where the vehicles are moving at such low speeds where tilting of the side car is not necessary.

Furthermore, if required, the suspension of car 3 can include a phneumatically operated shock absorber (not shown) of which the air pressure is adjustable. Such adjustment can then be effected in order to cope with different road surfaces and with diffrent loads carried by car 3, so that the shock absorber can increase and decrease in length the appropriate amount during tilting of the car in accordance with the load carried by the car.

It will be appreciated that the coupling of the invention provides an arrangement with which the problems referred to in the preamble of this specification can be overcome or at least minimised.

It will be appreciated further that the invention also includes within its scope a motor cycle side car combination connected to each other by means of a coupling according to the invention.

It will be appreciated still further that there are no doubt many variations in detail possible with a coupling and a motor cycle side car combination according to the invention without departing from the spirit and/or scope of the appended claims.

## Claims

1. A coupling for connecting a motor cycle to a side car including a first elongated member which is pivotally connectable to the cycle and the car so that the cycle and car when so connected are each capable of pivotal movement about an axis which is parallel to the normal direction of forward travel of the vehicles; and means which is actuated by the pivotal movement of the cycle to cause the car to tilt through an angle of which the size depends on the tilting angle of the cycle and on whether such tilting of the cycle is towards or away from the car.

2. The coupling of claim 1 wherein the said means includes a second elongated member of which the ends are connected to the cycle and the car respectively in positions spaced vertically from the said first member; the effective length of the second member being able to increase or to decrease in order to change the angle of tilt of the car relative to the cycle.

3. The coupling of claims 1 or 2 wherein the said means also includes a third elongated member of which the ends are connected to the cycle and the car respectively in positions spaced vertically from the said first member, but on the opposite side of the said first member as that on which the said second member is located, the effective length of the said third member also being able to be increased or decreased in order to change the angle of tilt of the car relative to the cycle.

4. The coupling of claim 3, wherein the said means includes two semi-circular disc-like brackets which are secured to the frames of the cycle and the car respectively in diametrically opposed positions, with the straight ends of the brackets extending in a plane which is substantially perpendicular to the surface on which the vehicles are supported in their normal upright positions, and with the plane furthermore being substantially perpendicular to the longitudinal axes of the vehicles so that the curved ends of the brackets face each other; the aforesaid first elongated member comprising an elongated rigid bar of which the ends are respectively pivotally connected to each of the brackets in positions which are off set relative to the radially extending axis of symmetry of that particular bracket; the aforesaid second member comprising an elongated flexible element of which the one end is connected to one of the ends of the straight part of one of the circular brackets, and its other end to the corresponding end of the other bracket; and the aforesiad third member comprising an elongated flexible element of which the ends are connected to the other of the aforesaid ends of the straight ends of the brackets, with the arrangement such that each element towards each of its ends extends over at least part of the curved surfaces of the circular bracket to which it is connected.

5. The coupling of claim 4 wherein the apertures in the brackets are located vertically below the said radially extending axis of symmetry.

6. The coupling of claims 4 or 5 wherein the said bar is provided with a plurality of rollers which serve to trap the flexible elements in engagement with the curved surfaces of the circular brackets over substantial parts thereof.

7. The coupling of claim 6 wherein the rollers are so located that that part of the element which extends between the point where it is secured to the bracket, and the roller nearest to such point is carried in engagement with a substantial part of the curved end of the particular bracket.

8. The coupling of claim 6 or 7 wherein the said bar is constituted by two substantially parallel spaced plates which include between each of their opposite ends a pin which passes through an aperture in the bracket, which aperture is located in the aforesaid off set position so that the bracket is rotatably carried in a cam-like movement relative to the pin, the aforesaid rollers also being rotatably received in pairs between the plates in positions located towards the outer ends of the plates.

9. The coupling of any one of claims 3 to 8 wherein the flexible elements comprise metal or "flat fibre" straps, chains, sprocket belts, gear chains, V-belts or the like.

10. The coupling of any one of the preceding claims which also includes a releasable locking device by means of which the pivotal connection between the cycle and the car can be prevented so that the coupling between the two vehicles is rendered substantially rigid.

11. The coupling of claim 10, in so far as it is dependent on any one of claims 3 to 9, wherein the device comprises a releasable lever operated clamp which serves to prevent the said flexible element(s) and/or the brackets from moving relative to the said first elongated member.

12. The coupling of any one of the preceding claims wherein the suspension of the side car is provided with one or more pneumatically operated shock absorbers of which the air pressure is adjustable.

13. The coupling of any one of the preceding claims in which the said first elongated member has a cross member connected to it which extends transversely the first elongated member in the direction of normal forward travel of the vehicles, the other end of the cross member being connected to a fourth substantially rigid elongated member which extends substantially parallel to the said first elongated member, the ends of the fourth member being pivotally connectable to the cycle and the car respectively.

14. The coupling of any one of the preceding claims wherein the side-car is carried on a land engageable wheel which is mounted towards the centre of the car in a position located substantially immediately below the seat of the car, and more or less in line with the rear wheel of the cycle.

15. The coupling of any one of the preceding claims wherein the side car comprises a substantially box-like enclosure in which a person can sit, the enclosure being provided with an opening at its upper end which can be closed off by means of a wind shield which is slidably mounted on the body of the car.

16. A motor cycle and side car which is connected to each other by the coupling of any one of the preceding claims.

FIGURE 2

FIGURE 1

FIGURE 3

FIGURE 4

EP 0 352 132 A2